**Europäisches Patentamt**

**European Patent Office**

**Office européen des brevets**

(19)

(11) Veröffentlichungsnummer : **0 355 441 B1**

(12) **EUROPÄISCHE PATENTSCHRIFT**

(45) Veröffentlichungstag der Patentschrift :
**13.05.92 Patentblatt 92/20**

(51) Int. Cl.$^5$ : **A01D 45/02**

(21) Anmeldenummer : **89113669.9**

(22) Anmeldetag : **25.07.89**

(54) **Pflückvorsatz für ein Erntegerät.**

(30) Priorität : **20.08.88 DE 3828358**

(43) Veröffentlichungstag der Anmeldung :
**28.02.90 Patentblatt 90/09**

(45) Bekanntmachung des Hinweises auf die
Patenterteilung :
**13.05.92 Patentblatt 92/20**

(84) Benannte Vertragsstaaten :
**AT BE CH DE ES FR GR IT LI NL**

(56) Entgegenhaltungen :
**AT-B- 303 433**

(56) Entgegenhaltungen :
**DE-A- 1 757 456**
**DE-A- 3 619 691**
**DE-A- 3 726 967**
**DE-U- 8 600 113**

(73) Patentinhaber : **Kalverkamp, Klemens**
**Possenbrock 29**
**W-4730 Ahlen/Westfalen (DE)**

(72) Erfinder : **Kalverkamp, Klemens**
**Possenbrock 29**
**W-4730 Ahlen/Westfalen (DE)**

(74) Vertreter : **Habbel, Hans-Georg, Dipl.-Ing.**
**Postfach 3429 Am Kanonengraben 11**
**W-4400 Münster (DE)**

**Beschreibung**

Die Erfindung bezieht sich auf einen Pflückvorsatz für ein Erntegerät gemäß dem Oberbegriff des Hauptanspruches.

Ein gattungsbildendes Erntegerät ist in der EP 91 635 B1 beschrieben. Das wesentliche dieses Erntegerätes ist darin zu sehen, daß der eigentliche Pflückvorsatz je Pflanzenreihe nur einen Einzugsrotor aufweist, dem eine Teilummantelung zugeordnet ist, wobei die Teilummantelung vorzugsweise unten feststehende Schneidmesser aufweist, die in entsprechende Schlitze der Flügel des Einzugsrotors hineinragen und dadurch eine Zerkleinerung der Pflanze bewirken. Hierbei wird die Pflanze nur einseitig mittels des Einzugsrotors erfaßt, durch den Pflückspalt heruntergezogen, wobei durch den Herunterziehvorgang auch eine Zerkleinerung der Pflanze durch feststehende Zerkleinerungselemente erfolgt.

Die bekannte Einrichtung hat sich in der Praxis aus gezeichnet bewährt. Als nachteilig wurde empfunden, daß der Verschleiß an den Flügeln des Einzugsrotors relativ erheblich ist und daß, wenn die Flügel verschlissen sind, bei den bekannten Geräten eine komplette Erneuerung des Einzugsrotors notwendig war.

Der Erfindung liegt daher die Aufgabe zugrunde, das gattungsbildende Gerät dahingehend zu verbessern, daß unter Beibehaltung der vorteilhaften Eigenschaften des gattungsbildenden Gerätes die dem Verschleiß unterworfenen Bauteile schnell ausgewechselt werden können, so daß damit der für die Wartung der Maschine aufzuwendende Aufwand verringert wird.

Diese der Erfindung zugrundeliegende Aufgabe wird durch die Lehre des Hauptanspruches gelöst.

Vorteilhafte Ausgestaltungen sind in den Unteransprüchen erläutert.

So ist es beispielsweise sehr vorteilhaft, wenn die Verschleißleisten einfach durch Schrauben an den Flügeln des Einzugsrotors festgelegt werden.

Um mit einer dünnen Tragwelle auszukommen, ist vorgesehen, daß Füllkörper den eigentlichen Außenumfang des Einzugsrotors bestimmen, wobei auch diese Füllkörper wiederum gewichtsmäßig niedrig gehalten werden können und leicht ausgewechselt werden können.

Schließlich wird gemäß der Erfindung vorgeschlagen, den eigentlichen Einzugsrotor nicht einteilig auszubilden, sondern aus einzelnen Rotorkörpern zusammenzusetzen, wobei es dabei möglich ist, die Rotorkörper hinsichtlich ihrer Flügelausrichtung gegeneinander zu verdrehen.

Um den Einsatzbereich der gattungsbildenden und erfindungsgemäßen Maschine zu erweitern, ist vorgesehen, daß die bei der gattungbildenden Maschine feststehenden Zerkleinerungsmesser nunmehr schwenkbar an der Teilummantelung angeordnet sind, so daß es möglich ist, dann, wenn auf ein Zerschneiden und Zerkleinern der Stengel des Erntegutes verzichtet werden soll oder kann, die Messer aus dem Wirkungsbereich des Einzugsrotors in einfachster Weise herausbringbar sind.

Um den Kraftaufwand der gattungbildenden Maschine zu verringern, wird weiterhin vorgesehen, daß im vorderen Bereich des Einzugsrotors ein Schneidmesser angeordnet wird, das die Stengel relativ nahe am Boden abtrennt, so daß beim Einzugsvorgang nicht der untere Teil der Stengel gestaucht werden muß. Hierbei sind zwei Ausführungsformen möglich, nämlich einmal kann ein umlaufend angetriebenes Scheibenzahnmesser vorgesehen sein, wobei dessen Zahnhöhe etwa 1/3 bis 1/10 der Stengelstärke entspricht.

Bei einer anderen Ausführungsform kann ein feststehendes sogenanntes "Schneidmesser am Schneckengang" vorgesehen werden, dessen Schneidkante in Fahrtrichtung ausgerichtet ist und das ein Durchtrennen der zu erntenden Stengel bewirkt.

Weitere vorteilhafte Ausgestaltungen der erfindungsgemäßen Einrichtungen gehen aus der nachfolgenden Beschreibung von Ausführungsbeispielen anhand der Zeichnungen hervor. Die Zeichnungen zeigen dabei in

Fig. 1 eine Ansicht von vorne in Achsrichtung eines Einzugsrotors, in

Fig. 2 eine Ansicht gemäß Fig. 1, aber bei zurückgezogenen Zerkleinerungsmesser, in

Fig. 3 eine Ansicht in Richtung der Ansicht gemäß Fig. 1 aber mit einem feststehenden Schneidmesser am Schneckengang, in

Fig. 4 eine schaubildliche Darstellung des Einzugsrotors und in

Fig. 5 eine schematische Draufsicht zur Verdeutichung der Scheibenzahnmesser.

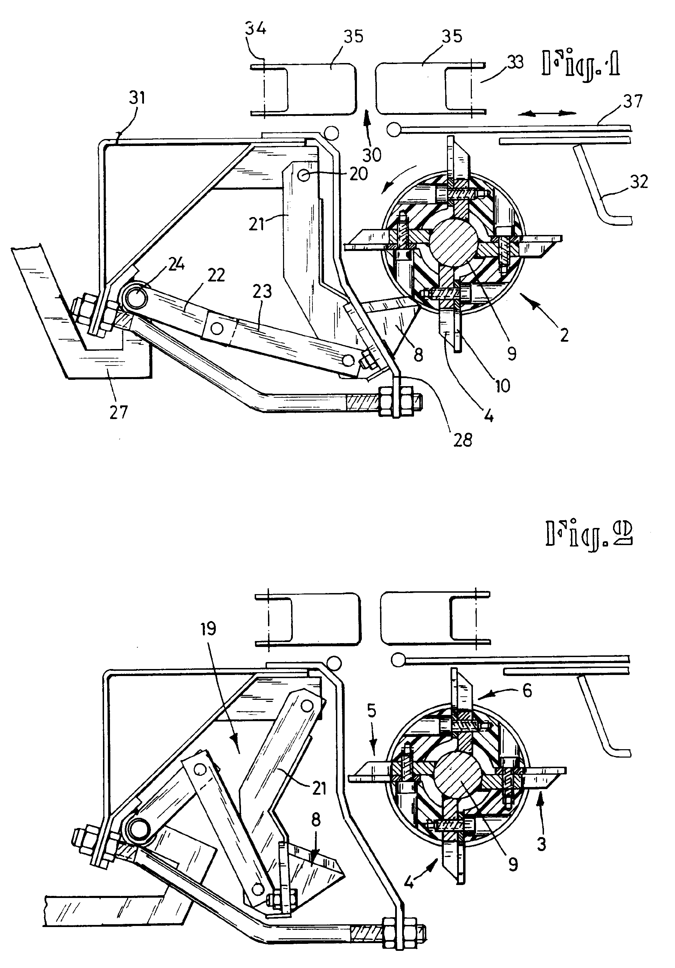

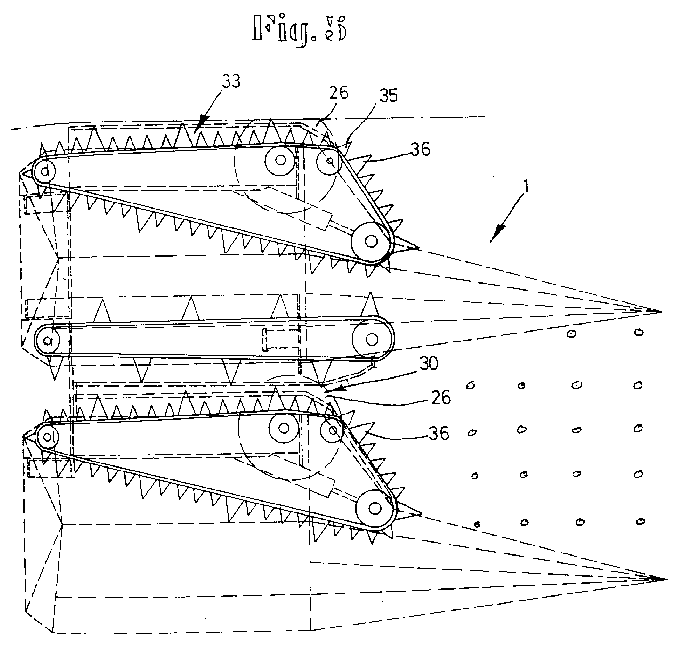

In Fig. 1 ist ein Pflückvorsatz 1 teilweise dargestellt und dieser Pflückvorsatz weist jeweils einen Einzugsrotor 2 auf, der umlaufend angetrieben wird und der mit Flügeln 3, 4, 5 und 6 bestückt ist, die über den Umfang des Einzugsrotors vorstehen. In den Flügeln sind, wie dies deutlich die Fig. 4 zeigt, Schlitze 7 vorgesehen, durch die von einer Teilummantelung 28 getragene Zerkleinerungsmesser ragen, die etwa am Außenumfang des Einzugsrotors 2 enden. Die Teilummantelung 28 und die Pflückplatte 37 begrenzen einen Pflückspalt 30. Oberhalb des Pflückspaltes 30 sind von den Rahmenträgern 31 und 32 getragen, Einzugsketten 33 und 34 vorgesehen, die mit Mitnehmerfingern 35 ausgerüstet sind. Der Pflückspalt 30 wird von der Teilummantelung 28 und einer Pflückplatte 37 gebildet, die zur Variierung der Größe des Pflückspaltes 30 verstellbar ist (Pfeil).

Der eigentliche Einzugsrotor 2 weist eine Tragwelle 9 auf, wobei bei dem in Fig. 4 dargestellten Ausführungsbeispiel die Flügel 3, 4, 5 und 6 fest auf der Tragwelle angeordnet sind. Von diesen Flügeln 3, 4, 5 und 6 werden Verschleißleisten 10, 11, 12 und 14 getragen, wobei vorzugsweise diese Verschleißleisten mit Schrauben an den Flügeln 3, 4, 5 und 6 festgelegt sind.

Die so gebildeten Zwischenräume zwischen den Verschleißleisten und Flügeln werden durch Füllkörper 15, 16, 17 und 18 ausgefüllt, die beispielsweise aus Kunststoff bestehen können und leicht auswechselbar sind.

Wie dies Fig. 4 weiterhin verdeutlicht, ist der Einzugsrotor aus drei einzelnen Rotorkörpern 2a, 2b und 2c aufgebaut, die in Umfangsrichtung gegeneinander versetzt so sind, daß der gewünschte absatzweise Eingriff der Flügel gewährleistet wird.

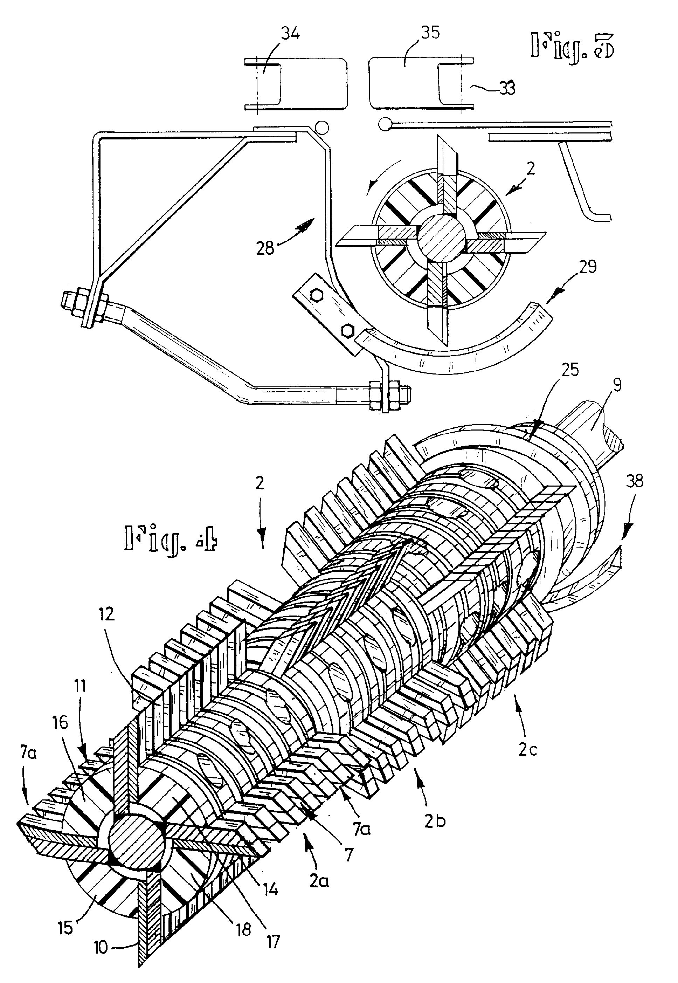

Aus Fig. 3 und 4 ist weiterhin erkennbar, daß im vorderen Bereich des Einzugsrotors, in welchem ein Schneckengang 25 angeordnet ist, ein Schneidmesser 29 vorgesehen ist, daß der Wölbung des Schneckenganges des Rotors angepaßt ist und dessen eigentliche Schneidkante, die mit 38 in Fig. 4 bezeichnet ist, in Fahrtrichtung ausgerichtet ist. Hierdurch erfolgt ein Abtrennen der Stengel, bevor der Durchzugsvorgang beginnt, so daß ein Stauchen der Stengel bei der Arbeit der Maschine vermieden wird.

In Fig. 1 ist ein Zerkleinerungsmesser 8 erkennbar. Entsprechend der Anzahl der Schlitze 7 bzw. 7a auf dem Rotor ist eine entsprechend große Anzahl solcher Zerkleinerungsmesser in Achsrichtung des Einzugsrotors 2 vorgesehen. Das Zerkleinerungsmesser 8 wird von einem Tragbalken 21 getragen, der schwenkbar in einer Lagerung 20 am Rahmenträger angeordnet ist. Am unteren Ende des Tragbalkens 21 greifen zwei Kniehebel 22 und 23 an, wobei der Kniehebel 23 einerseits am Tragbalken, andererseits am vorderen Ende des Kniehebels 22 und der Kniehebel 22 einerseits am rückwärtigen Ende des Kniehebels 23 und andererseits an einer Lagerung 24 angreift, wobei die Lagerung 24 zusätzlich mit einem Handhebel 27 verbunden ist. Durch eine entsprechende Betätigung des Handhebels 27 wird der Kniehebel aufgeklappt, und dadurch werden die Zerkleinerungsmesser 8 zurückgezogen, so daß nunmehr mit der gleichen Maschine auch ein Arbeiten ohne Zerkleinerung der Stengel des Erntegutes möglich wird.

An Stelle oder zusätzlich zum Schneidmesser 29 am Schneckengang kann, wie dies in Fig. 5 verdeutlicht ist, unterhalb und vor dem Einzugsrotor 2 ein umlaufend angetriebenes Scheibenzahnmesser 26 vorgesehen sein, das ebenfalls ein Abtrennen der Stengel vor dem Durchzugsvorgang bewirkt. Hierbei ist die Zahnhöhe des Scheibenzahnmessers 26 so gewählt, daß diese Zahnhöhe etwa 1/3 bis 1/10 der Stengelstärke entspricht.

Aus Fig. 5 ist weiterhin erkennbar, daß die Mitnehmerfinger auf den Einzugsketten 33 unterschiedlich ausgebildet sind. Die kleineren Mitnehmerfinger 35 ergreifen nur im Einzugsbereich des Pflückvorsatzes das Erntegut und führen dies zum eigentlichen Pflückspalt 30, wobei die Förderung des Erntegutes durch den Pfückspalt 30 durch die größeren und über den Pflückspalt 30 ragenden Mitnehmerfinger 36 erfolgt.

## Patentansprüche

1. Pflückvorsatz (1) für ein Erntegerät zum Ernten von Körnerfrüchten, z. B. Mais od. dgl. mit einem aus einer Tragwelle bestehenden Einzugsrotor (2), der auf seinem Umfang mit fest - vorzugsweise materialschlüssig - auf der Tragwelle angeordneten Flügeln (3, 4, 5, 6) ausgerüstet ist, die Schlitze (7) aufweisen, in die von der Maschine getragene Zerkleinerungsmesser (8) eingreifen, dadurch gekennzeichnet, daß an den Flügeln (3, 4, 5, 6) kammartig ausgebildete Verschleißleisten (10, 11, 12, 14) befestigt sind, derenSchlitze (7a) mit den Schlitzen (7) in den Flügeln (3, 4, 5, 6) fluchten und deren Vorderkante die Vorderkante der Flügel überragt.

2. Pflückvorsatz nach Anspruch 1, dadurch gekennzeichnet, daß die Verschleißleisten (10, 11, 12, 14) mittels Schrauben an den Flügeln (3, 4, 5, 6) befestigt sind.

3. Pflückvorsatz nach einem oder mehreren der vorhergehenden Ansprüche, dadurch gekennzeichnet, daß zwischen den Flügeln (3, 4, 5, 6) und der Tragwelle (9) den Außenumfang des Rotorkörpers bestimmende Füllkörper (15, 16, 17, 18) angeordnet sind.

4. Pflückvorsatz nach einem oder mehreren der vorhergehenden Ansprüche, dadurch gekennzeichnet, daß der Einzugsrotor (2) aus in Achsrichtung der Tragwelle (9) gesehen mehreren Rotorkörpern (2a, 2b, 2c) zusammengesetzt ist, deren Flügelausrichtung jeweils gegeneinander versetzt ist.

5. Pflückvorsatz nach einem oder mehreren der vorhergehenden Ansprüche, dadurch gekennzeichnet, daß die Tragwelle (9) als Rohrkörper ausgebildet ist.

6. Pflückvorsatz nach einem oder mehreren der vorhergehenden Ansprüche 1 bis 5, dadurch gekennzeichnet, daß die Tragwelle (9) als Vollkörper ausgebildet ist.

7. Pflückvorsatz nach einem oder mehreren der vorhergehenden Ansprüche, dadurch gekennzeichnet, daß die mit dem Einzugsrotor (2) zusammenwirkenden Zerkleinerungsmesser (8) von der Maschine schwenkbar unter Zwischenschaltung eines einenendes schwenkbar gelagerten zweiteiligen Kniehebelgestänges (19) gelagert sind.

8. Pflückvorsatz nach Anspruch 7, dadurch gekennzeichnet, daß die Zerkleinerungsmesser (8) von einem an einer Lagerung (20) schwenkbar gelagerten Tragbalken (21) getragen sind, an dem der Lagerung (20) gegenüberliegend ein erster Kniehebel (23) schwenkbar anchließt, der anderenendes schwenkbar an einen zweiten, auch andevenendes schwenkbar gelagerten Kniehebel (22) gelentig anschließt.

9. Pflückworsatz nach Anspruch 7 und 8, dadurch gekennzeichnet, daß das Kniehebelgestänge (19/22, 23) von einem Handhebel (27) betätigt wird.

10. Pflückvorsatz nach einem oder mehreren der vorhergehenden Ansprüche mit im vorderen Bereich des Einzugsrotors angeordnetem Schneckengang, dadurch gekennzeichnet, daß unterhalb des Schneckenganges (25) des Einzugsrotors (2) ein umlaufend angetriebenes Scheibenzahnmesser (26) vorgesehen ist.

11. Pflückvorsatz nach einem oder mehreren der vorhergehenden Ansprüche, dadurch gekennzeichnet, daß die Zahnhöhe des Scheibenzahnmessers (26) etwa 1/3 bis 1/10 der Stengelstärke des zu erntenden Erntegutes entspricht.

12. Pflückvorsatz nach einem oder mehreren der vorhergehenden Ansprüche 1 bis 9, dadurch gekennzeichnet, daß der Teilummantelung (28) im Bereich des Schneckenganges (25) ein gewölbtes Schneidmesser (29) vorgesehen ist, dessen Schneidkante in Fahrtrichtung ausgerichtet ist.

13. Pflückvorsatz nach Anspruch 12, dadurch gekennzeichnet, daß die Wölbung des Schneidmessers (29) am Schneckengang (25) der Wölbung des Schneckenganges des Einzugsrotors (2) angepaßt ist.

13. Pflückvorsatz nach Anspruch 12, dadurch gekennzeichnet, daß die Wölbung des Schneidmessers (29) am Schneckengang (25) der Wölbung des Schneckenganges des Einzugsrotors (2) angepaßt ist.

14. Pflückvorsatz nach einem oder mehreren der vorhergehenden Ansprüche mit an der Einzugsketten (33) angeordneten Mitnehmerfingern (35), dadurch gekennzeichnet, daß die Mitnehmerfinger (35) unterschiedlich groß sind, so daß nur ein Teil der Mitnehmerfinger, über den Pflückspalt (30) ragen.

## Claims

1. Picking attachment (1l) for a harvester for harvesting cereals, for example maize or the like, having an intake rotor (2), comprising a bearing shaft, which rotor is equipped on its circumference with blades (3, 4, 5, 6) which are firmly - preferably integrally - arranged on the bearing shaft and have slits (7), into which there engage size-reducing knives (8), borne by the machine, characterised in that fastened to the blades (3, 4, 5, 6) there are comb-like wear strips (10, 11, 12, 14), the slits (7a) of which align with the slits (7) in the blades (3, 4, 5, 6) and the front edge of which protrudes beyond the front edge of the blades.

2. Picking attachment according to Claim 1, characterised in that the wear strips (10, 11, 12, 14) are fastened to the blades (3, 4, 5, 6) by means of screws.

3. Picking attachment according to one or more of the preceding claims, characterised in that arranged between the blades (3, 4, 5, 6) and the bearing shaft (9) there are fillers (15, 16, 17, 18), determining the outer circumference of the rotor body.

4. Picking attachment according to one or more of the preceding claims, characterised in that, seen in the axial direction of the bearing shaft (9), the intake rotor (2) is made up of several rotor bodies (2a, 2b, 2c), the blade alignment of which is in each case offset with respect to one another.

5. Picking attachment according to one or more of the preceding claims, characterised in that the bearing shaft (9) is designed as a tubular body.

6. Picking attachment according to one or more of the preceding Claims 1 to 5, characterised in that the bearing shaft (9) is designed as a solid body.

7. Picking attachment according to one or more of the preceding claims, characterised in that the size-reducing knives (8), interacting with the intake rotor (2), are mounted such that they can swivel from the machine, with interposing of a two-part toggle-lever linkage (19), swivel-mounted at one end.

8. Picking attachment according to Claim 7, characterised in that the size-reducing knives (8) are borne by a bearing beam (21), swivel-mounted on a mounting (20), which beam is adjoined in a swivelling manner by a first toggle lever (23), which is opposite the mounting (20) and at the other end adjoins in a swivel-jointed manner a second toggle lever (22), which is also swivel-mounted at the other end.

9. Picking attachment according to Claims 7 and 8, characterised in that the toggle-lever linkage (19, 22, 23) is actuated by a hand lever (27).

10. Picking attachment according to one or more of the preceding claims, with a worm thread arranged in the front region of the intake rotor, characterised in that below the worm thread (25) of the intake rotor (2) there is provided a rotationally driven toothed disc knife (26).

11. Picking attachment according to one or more of the preceding claims, characterised in that the tooth-height of the toothed disc knife (26) corresponds approximately to 1/3 to 1/10 of the stalk thickness of the crop to be harvested.

12. Picking attachment according to one or more of the preceding Claims 1 to 9, characterised in that the partial surround (28) is preceded in the area of the worm thread (25) by a curved cutting knife (29), the cutting edge of which is facing in the direction of travel.

13. Picking attachment according to Claim 12, characterised in that the curvature of the cutting knife (29) at the worm thread (25) is adapted to the curvature of the worm thread of the intake rotor (2).

14. Picking attachment according to one or more of the preceding claims, with catch fingers (35) arranged on the intake chains (33), characterised in that the catch fingers (35) are of different sizes, so that only some of the catch fingers protrude beyond the picking gap (30).

**Revendications**

1. Appareil à cueillir (1) pour une moissonneuse pour la récolte de grains, par exemple de maïs ou similaire avec un rotor d'introduction (2) se composant d'un arbre porteur, pourvu sur sa circonférence d'ailettes (3,4,5,6) disposées de manière fixe -de préférence solidaires- sur l'arbre porteur, qui présentent des fentes (7) dans lesquelles se mettent en prise des couteaux à découper (8) portés par la machine, caractérisé en ce que des bandes d'usure (10,11,12,14) dont la fente (7a) est alignée avec les fentes (7) dans les ailettes (3,4,5,6) et dont le bord antérieur dépasse du bord antérieur des ailettes, sont disposées de manière à former un peigne sur les ailettes (3,4,5,6).

2. Appareil à cueillir selon la revendication 1, caractérisé en ce que les bandes d'usure (10,11,12,14) sont fixées au moyen de vis sur les ailettes (3,4,5,6).

3. Appareil à cueillir selon l'une quelconque des revendications précédentes, caractérisé en ce que des corps de remplissage (15,16,17,18) définissant la circonférence extérieure du corps de rotor sont disposés entre les ailettes (3,4,5,6) et l'arbre porteur (9).

4. Appareil à cueillir selon l'une quelconque des revendications précédentes, caractérisé en ce que le rotor d'introduction (2) est composé dans le sens axial de l'arbre porteur (9) de plusieurs corps de rotor (2a,2b,2c), dont l'orientation des ailettes est décalée pour chacun par rapport aux autres.

5. Appareil à cueillir selon l'une quelconque des revendications précédentes, caractérisé en ce que l'arbre porteur (9) est congru comme un corps tubulaire.

6. Appareil à cueillir selon l'une quelconque des revendications 1 à 5, caractérisé en ce que l'arbre porteur (9) est congru comme un corps plein.

7. Appareil à cueillir selon l'une quelconque des revendications précédentes, caractérisé en ce que les couteaux à découper (8) coopérant avec le rotor d'introduction (2) sont supportés de manière basculante par la machine avec interposition d'une barre à genouillère (19) en deux parties supportée de manière basculante à une extrémité.

8. Appareil à cueillir selon la revendication 7, caractérisé en ce que les couteaux à découper (8) sont portés par une poutrelle (21) disposée de manière basculante sur un support (20), sur laquelle se raccorde de manière basculante en face du support (20) une première genouillère (23), qui s'articule à l'autre extrémité de manière basculante à une seconde genouillère (22), également supportée de manière basculante à son autre extrémité.

9. Appareil à cueillir selon la revendication 7 ou 8, caractérisé en ce que la barre à genouillère (19,22,23) est actionnée par un levier manuel (27).

10. Appareil à cueillir selon l'une quelconque des revendications précédentes avec une spire disposée dans le secteur antérieur du rotor d'introduction, caractérisé en ce qu'un disque-couteau à dents (26) entraîné en rotation est prévu en-dessous de la spire (25) du rotor d'introduction (2).

11. Appareil à cueillir selon l'une quelconque des revendications précédentes, caractérisé en ce que la hauteur des dents du disque-couteau à dents (26) correspond à environ 1/3 à 1/10 de l'épaisseur des tiges des plantes à moissonner.

12. Appareil à cueillir selon l'une quelconque des revendications 1 à 9, caractérisé en ce que la couverture partielle (28) porte dans le secteur de la spire (25) un couteau de coupe (29) courbe, dont le bord coupant est orienté dans le sens de la marche.

13. Appareil à cueillir selon la revendication 12, caractérisé en ce que la courbure du couteau de coupe (29) sur la spire (25) est adaptée à la courbure de la spire du rotor d'introduction (2).

14. Appareil à cueillir selon l'une quelconque des revendications précédentes avec des doigts entraîneurs (35) disposés sur les chaînes d'introduction (33), caractérisé en ce que les doigts entraîneurs (35) sont de tailles différentes, de telle sorte qu'une partie seulement des doigts entraîneurs dépasse au-dessus de la fente de récolte (30).

Fig. 1

Fig. 2

6

Fig. 5

Fig. 4

Fig. 25